# EUROPEAN PATENT APPLICATION

(11) **EP 1 691 327 A1**
(43) Date of publication of application: **16.08.2006**
(21) Application number: 05003092.3
(22) Date of filing: 14.02.2005
(51) Int. Cl.: G06Q 10/00

(54) **Apparatus and method for settlement of transactions**

(71) Applicant: DEUTSCHE BÖRSE AG, 60487 Frankfurt am Main (DE)
(72) Inventor: Brütting, Bernhard, 60439 Frankfurt (DE); Schmuderer, Ralf, 65468 Trebur (DE); Beils, Karl-Bernhard, Dr., 63477 Maintal (DE); Rubner, Walter, 60388 Frankfurt (DE)
(74) Representative: Grünecker, Kinkeldey, Stockmair & Schwanhäusser Anwaltssozietät

(57) **Abstract**

Summarising, the present invention aims to provide a more efficient settlement engine requiring less computation effort and processing time. This is accomplished by establishing a total priority list of all transactions. The received transaction data to be settled are step-wisely transferred to an intermediate table storing the transaction data of highest priority for each security type, and transferring the transaction data of highest priority from the intermediate storage to the final total priority list.

## Description

The present invention relates to the settlement of transactions which define obligations for transferring securities versus cash between market participants. In particular, the present invention generally relates to a financial settlement system and engine for performing a multilateral netting procedure for settling transactions.

### BACKGROUND OF THE INVENTION

Transactions which stem, for instance, from a securities exchange, supply securities against payment of cash. A settlement algorithm, which defines the processing of security settlement instructions for the exchange of securities against cash, aims to efficiently organize the consumption of the available resources, i.e. the securities and cash. In order to streamline the settlement processing and to reduce the settlement risk, the counter parties intend to exchange the differences of the traded resources. The process used to exchange the differences only is called "netting".

In streamlining the settlement processing, a rule is required which provides instructions on how to deal with processing instructions in case of a shortage of resources, either of cash or of securities. Such a rule has to identify those instructions which are to be processed and which are not to be processed. It is a particular difficulty of such a rule, that a shortage may either occur for cash or for securities. While a security can be one of a plurality of different security types, cash can be used for all types of securities. A priority control of such a rule handling a shortage of resources has consequently to cope with both types of shortages which always relate to two different market participants and consequently different sides and interests.

During the settlement of transactions, a settlement engine has to differentiate between two different algorithms.

A "gross algorithm" processes each transaction individually. Consequently, for each individual transaction an examination is performed whether or not a seller of securities has a sufficient number of securities available and, at the same time, the buyer of the securities has sufficient cash available. The processing of all individual transactions is independent from each other.

It is a disadvantage of the gross algorithm that sufficient resources have to be provided corresponding to the sum of all transactions to be settled. Accordingly, securities have to be provided for all purchases and cash has to be provided for the sales of all securities.

These disadvantages are avoided by a "net algorithm". The net algorithm applies a multi-lateral netting among a plurality of parties to net their obligations. Accordingly, settlement instructions for the same securities, either a purchase or a sales instruction, are netted on a multi-lateral bases.

In case a seller does not have a sufficient number of securities, or a buyer does not have a sufficient amount of cash available, particular transactions have to be excluded from the settlement processing. To achieve a better settlement result, a removed transaction can be re-activated again. It is the crucial condition for settling transactions, that the final netting result is covered by the available resources. As only the final netting result needs to be covered by the available resources, the total amount of resources which needs to be available is considerably lower compared to the gross algorithm.

During the netting process it may happen that there is indeed a sufficient amount of securities for each of the individual types of securities of the transactions available, but the cash needed to fulfil the transactions by the counter party is not sufficient. Consequently, the settlement processing fails and has to be repeated after removing the uncovered transaction.

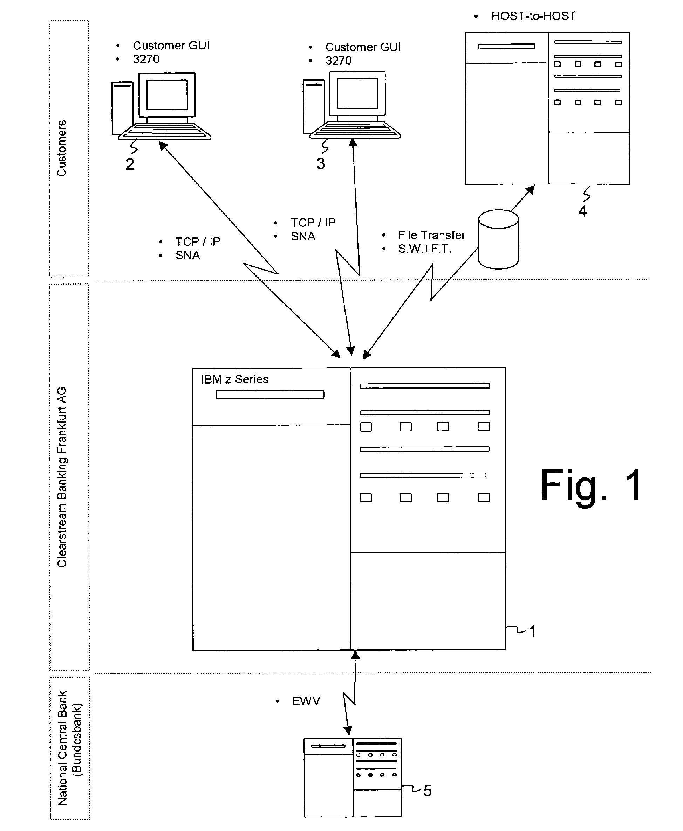

A conventional settlement processing will be described in the following with reference to Figs. 1 to 4. The technical environment for a settlement processing is shown in Fig. 1. Market participants are connected to a Central Securities Depository, for instance, Clearstream Banking AG in Frankfurt. The market participants can directly transfer their transaction data from remote terminals 2,3,4 at the customer's side to the settlement engine. The processing of the settlement is performed by the settlement engine 1, preferably implemented in a mainframe computer. In addition, mainframe computer 1 is communicating with a National Central Bank, for instance the German Bundesbank 5.

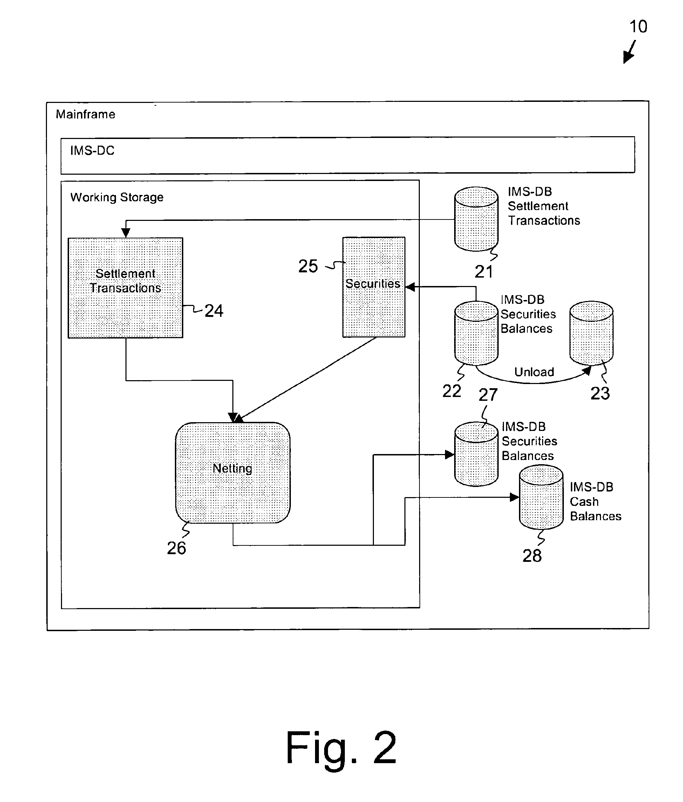

The internal configuration and processing within mainframe 10 is illustrated in Fig. 2.

The transaction data received from the market participants are read from IMS-DB database 21 to a respective storage section 24 in the mainframe's working memory. Further, the securities balances reflecting the available amount of securities for each type of security is transferred from the IMS database 22 to storage section 25 of the working memory. Both types of data are stored with a 24 bits width, read statically and merged to a single one-dimensional netting table stored in memory section 26 of the working memory. The resulting security amounts are written as current data records into IMS database 27. Although database 27 is illustrated to be provided in addition to database 22, databases 22 and 27 are implemented in form of a single database which is updated by the processing results.

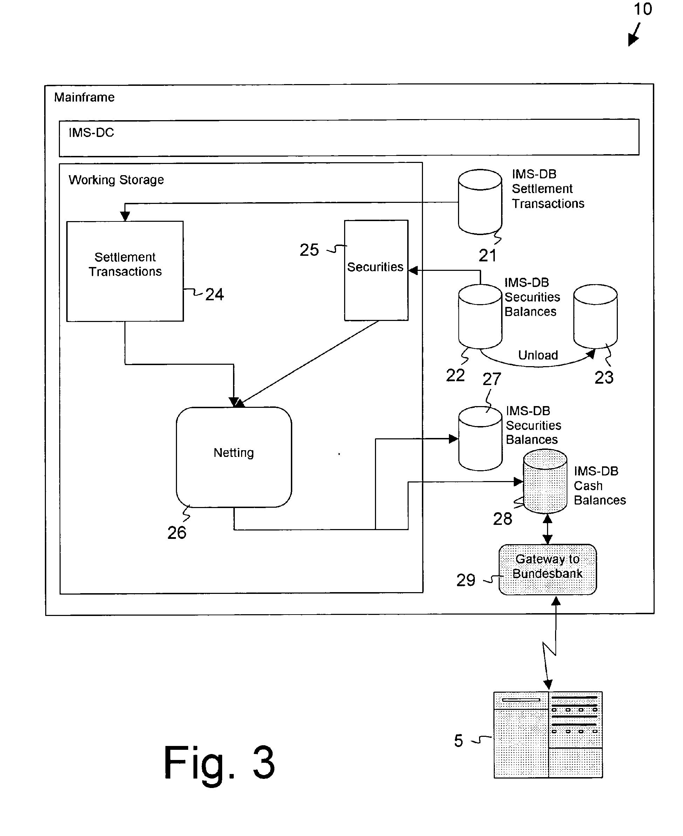

The corresponding cash results are transferred to IMS database 28. The cash balances from database 28 are sent via gateway 29 to the National Central Bank, as shown in Fig. 3. Only after receiving a confirmation from the National Central Bank 5, the resulting transaction balances stored in database 27 are marked to be final.

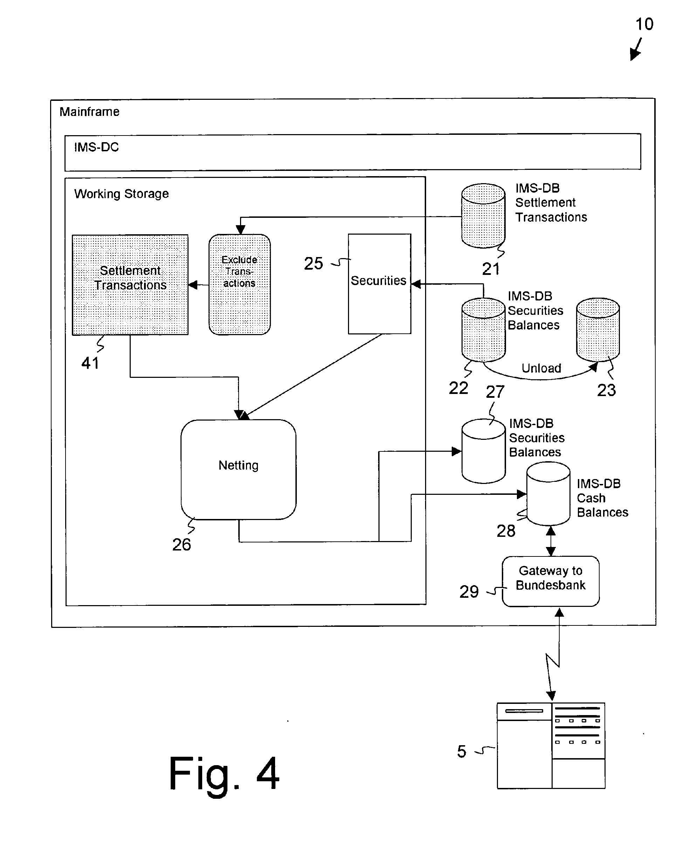

Upon receiving a failure acknowledgment from the Central National Bank 5 for one or a plurality of market participants (for instance due to bankruptcy), the complete settlement processing has to be repeated based on the initial set of data. Such a repetitive processing is illustrated in Fig. 4. The original securities balances in database 22 have to be re-activated. For this purpose, the original securities balances are re-loaded to database 22 from back-up database 23. Database 23 serves to memorize the initial set of data reflecting the state before the settlement processing has been started.

When transferring transactions from database 21 to the respective memory section 41 in the mainframe's working storage, those transactions have to be removed which relate to market participants without cash coverage. The netting processing is repeated based on the reduced set of stored transaction data.

The resulting securities and cash balances are again transmitted to the National Central Bank 5 for coverage evaluation and - upon receiving a confirmation - the resulting securities become final.

However, during a repeated processing, market participants which had been excluded may have not executed their transactions and, consequently, the remaining market participants did not receive a respective cash. Accordingly, market participants might not have cash coverage during the repeated processing as their transactions are based on cash received from market participants that have been excluded. Accordingly, the settlement processing may restart again by further excluding additional market participants from the settlement procedure.

It is a drawback of existing settlement engines that the processing is inefficient based on a possibly repetitive settlement processing in order to arrive at a final netting result.

### SUMMARY OF THE INVENTION

Given these problems with the prior art settlement engines, the present invention aims to enable a settlement processing with increased efficiency.

Moreover, the present invention intends to allow a clear and simple decision for any arising resource shortage, either in cash or securities.

This is achieved by the subject matter of the independent claims.

Preferred embodiments of the present invention are the subject matter of dependent claims.

According to a first aspect of the present invention, a settlement engine for settling transactions which define obligations for transferring securities versus cash between market participants is provided. The settlement engine comprises first to fifth memories and a processor. The first memory stores transaction data, the second memory stores transaction data in form of a total priority list, the third and the fourth memories store the available securities and cash of the involved market participants, and the fifth memory stores net obligations resulting from a netting process. The processor establishes a total priority list of the transaction data to be stored in the second memory. The processor further nets the obligations stemming from the transactions with respect to the individual market participants in accordance with the total priority list of transaction data in the second memory. The processor skips a transaction data of the total priority list stored in the second memory from the netting process in case of a shortage of cash or securities of the respective transaction based on the data stored in the third and fourth memories.

According to another aspect, a method for settling transactions which define obligations for transferring securities versus cash between market participants is provided. Transaction data are stored in first memory. A total priority list of the transaction data is established. The transaction data are stored in a second memory in form of the established total priority list. The available securities and cash of the involved market participants are stored in a third memory and a fourth memory. The obligations stemming from the transactions with respect to the individual market participants are netted in accordance with the total priority list of transactions in the second memory. A transaction from the overall order of the second memory is skipped from the netting process in case of a shortage of cash or securities of the respective transaction based on the data stored in the third and a fourth memory. The net obligations resulting from the netting process are stored in a fifth memory.

It is the particular approach of the present invention to establish and store a total priority list of transaction data for processing the transactions. In accordance with the computed priorities of the transaction data to be settled, the stored total priority list enables to immediately solve the problem of an arising resource shortage. For this purpose, that transaction data are skipped during the settlement processing which fails to have a sufficient coverage of cash or securities. By a single calculation and storage of a total priority list of the transaction data, a repeated settlement processing can be efficiently avoided. In this manner, time consuming iterations and database accesses are prevented.

Preferably, the transaction data include a priority data field indicating the priority of the security underlying the transaction. Based thereon, the total priority list is generated in accordance with the priority of the particular type of security. In this manner, a particular sequence of transactions within each type of securities can be maintained.

Preferably, the transaction data further includes a settlement date data field and/or a cash counter value data field. Accordingly, the transaction data can be ordered in accordance with the settlement day and/or the cash counter value, in particular for those transaction data having the same securities type priority.

Preferably, the total priority list is established by comparing the respective data fields of the transaction data. Based on the comparison result, the priority of the transaction data with respect to each other can be established in descending or ascending order. In particular, the priority data fields of the transaction data are compared with each other.

After having ordered the transaction data in accordance with the priority data field, preferably, a further data field is taken into account to establish a transaction data order for all transaction data having equal priority.

For all transaction data having equal data fields, the transaction data are preferably randomly prioritised for establishing a transaction data order.

Preferably, the transaction data stored in the first memory have a data length of 64 bits.

Preferably, the transaction data stored in the second memory have a data length of 24 bits.

Preferably, the determination whether or not to skip transaction data is performed in accordance with a coverage evaluation based on the data stored in the third and fourth memories, i.e. the available securities and cash of the involved market participants. Accordingly, when skipping transaction data from the total priority list of transaction data, those transaction data having the lowest priority are skipped. In this manner, a shortage of resources only affects the transaction of lowest priority and, thus, keeps the damage caused by this shortage small.

When reactivating transaction data that have been skipped, that transaction data is reactivated having the highest priority of the skipped transaction data. In this manner, the damage caused by skipped transaction data is minimised.

### DESCRIPTION OF THE DRAWINGS

In the accompanying drawings, preferred embodiments of the present invention are described in more detail. The drawings are not to be construed as limiting the present invention to only the illustrated and described examples of how the invention can be made and used. Further features and advantages will become apparent from the following and more particular description of the invention, which is illustrated in the accompanying drawings, wherein:
- Fig. 1: illustrates the technical environment of a settlement engine;
- Fig. 2: illustrates in schematic form the conventional configuration and processing of a settlement engine;
- Fig. 3: illustrates the conventional settlement engine and processing of Fig. 2 and the working interrelationship with the National Central Bank;
- Fig. 4: illustrates the settlement engine and processing of Fig. 2 after failure of a netting processing;

- Fig. 5: schematically illustrates a settlement engine and processing, in particular for the opening stage, in accordance with the present invention;
- Figs. 6A to 6H: illustrate the processing steps for the establishment of the total priority list of transaction data of different types of securities;
- Fig. 7: illustrates the settlement engine and processing of Fig. 5 for a cash processing with the National Central Bank;
- Fig. 8: schematically illustrates the settlement engine and processing in accordance with the present invention;
- Fig. 9: illustrates the processing steps required during a settlement processing in accordance with the present invention;
- Fig. 10: schematically illustrates the processing stages for establishing a total priority list of the transaction data;
- Fig. 11: illustrates an example of transaction input data; and
- Fig. 12: illustrates a total priority list generated from the input transaction data of Fig. 11.

### DETAILED DESCRIPTION OF THE INVENTION

The different aspects of the present invention will be described in the following with reference to the accompanying figure drawings, wherein like elements and structures are designated by like numerals.

In Fig. 1, a settlement engine together with its technical environment is illustrated. Market participants 2,3,4 are connected to the settlement engine 1 of a Central Securities Depository, for instance the Clearstream Banking AG in Frankfurt, via TCP/IP or SNA from their remote terminals or backends 2,3,4. Via 3270 access, a dedicated customer GUI, file transfer or S.W.I.F.T. the market participants can directly transfer the transaction data for settlement. For the settlement processing of the settlement engine 1, a dedicated LPAR with 64-bit addressing is used. For communications with the National Central Bank 5, an authentication of the communication is employed.

The financial settlement performed by settlement engine 1 is a fully automated multistage settlement process including a multi-lateral netting procedure. In order to improve the processing efficiency and to avoid a repetitive repriorisation of transaction data within the netting process, a total priority list of all transaction data is generated enabling an immediate decision to skip a particular transaction from the settlement - if needed.

Further, the unwinding risk of the settlement process is eliminated by two additional amendments to the opening part of the settlement process. Firstly, existing cash balances for the market participants are transmitted to the settlement engine before beginning the settlement process. Secondly, the opening is based on a transaction data length of 64 bits to establish the total priority list.

It is a particular aspect of the present invention that the total priority list is determined with respect to both, the securities and the cash side.

During the opening processing of the settlement process, a total priority list (including securities and cash) is established for the transactions with and without cash counter values (securities are paid with insolvency-safe Central Bank money). The total security list does not affect the sequence of transactions within a particular security type (ISIN). Accordingly, priorities within a security remain constant as, for instance, stock exchange transactions are to be settled before OTC businesses.

It is a particular advantage of the present invention that such a determination of a total priority list of the transactions to be settled applies to all of the following individual settlement processes, irrespective of the kind of shortage of resources. Further, the priorities within the total priority list remains unchanged, independent from the individual decisions of the netting process, i.e. removing of transaction data or reactivating removed transactions. A repeated sorting of the transactions to be settled based on the results of the netting process is not required.

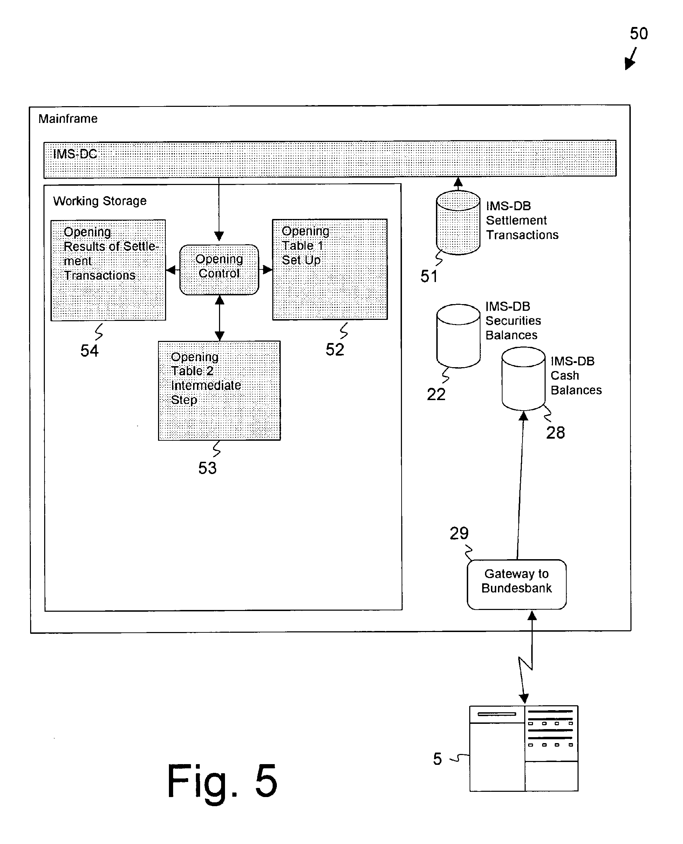

The opening of the settlement procedure will now be described in more detail with reference to Figs. 5 to 8. As illustrated in Fig. 5, the transaction data to be settled are transferred from the IMS database 51 to the working storage of settlement engine 50, in particular memory portion 52 shown in Fig. 5. This memory portion stores each transaction data with a 64-bit data length.

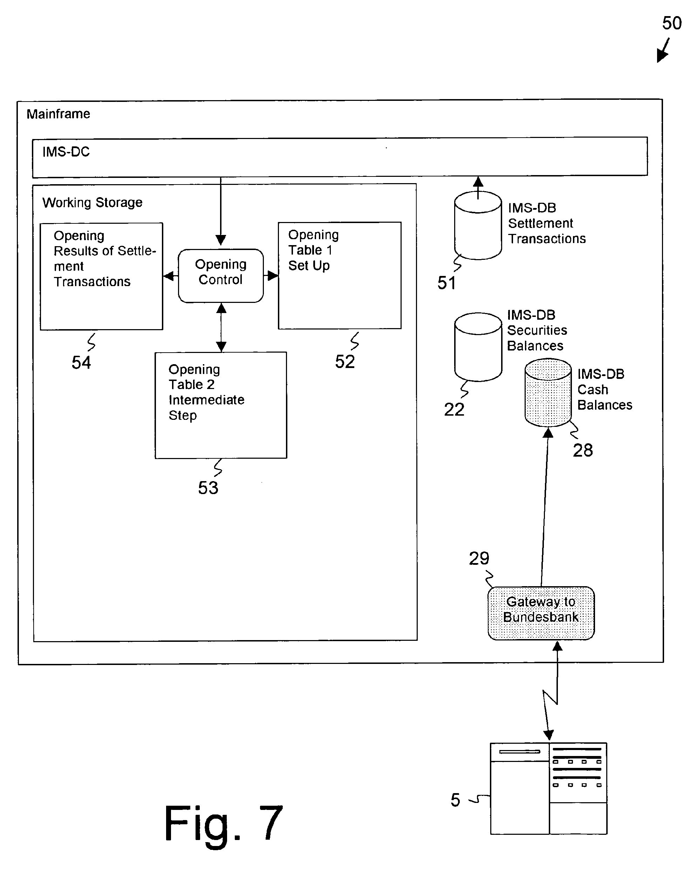

Further, the cash balances made available by the market participants are transferred from the National Central Bank 5 and stored in the internal IMS-DB database 28 in Fig. 7. To establish a total priority list of the transaction data memorised in Table 1 (52), the individual types of securities/ISIN are compared with each other in a comparator (not shown). Firstly, the most highly prioritised transaction data of the individual types of securities are compared. Secondly, the next prioritised transaction data of the identical type of securities is taken and compared with the most highly prioritised transaction data in another type of securities. This processing is continued until all transaction data to be settled are included into the total priority list stored in memory section 54 of the settlement engine's working storage. Based on the total priority list of transaction data and the handling of a shortage of resources, the final result of the settlement (netting) process is independent from an intermediate settlement (netting) result and avoids any time consuming re-priorisations.

When establishing the total priority list of transaction data, two or more transaction data may have the same priority after the comparison process. These transaction data are randomly prioritised with respect to each other, neither preferring a type of securities nor a customer.

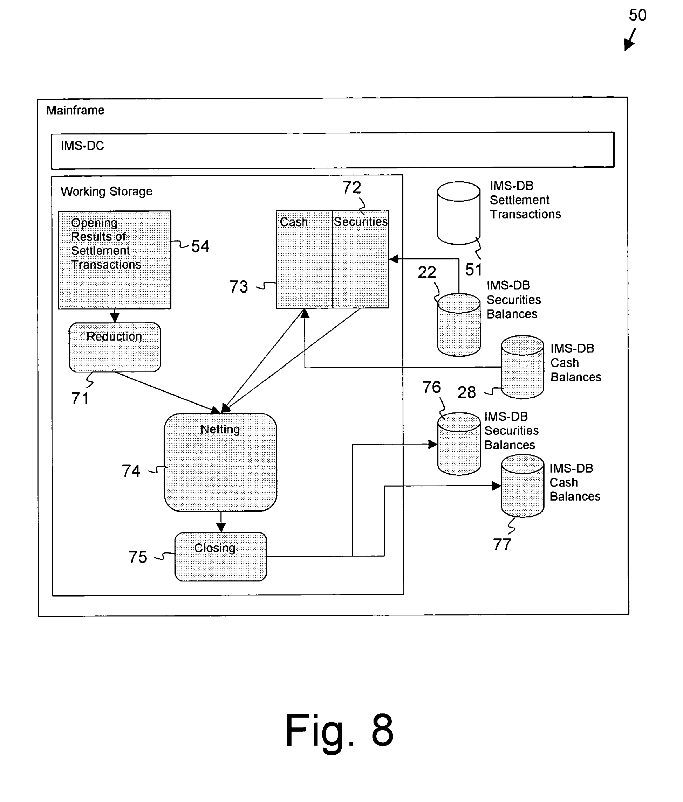

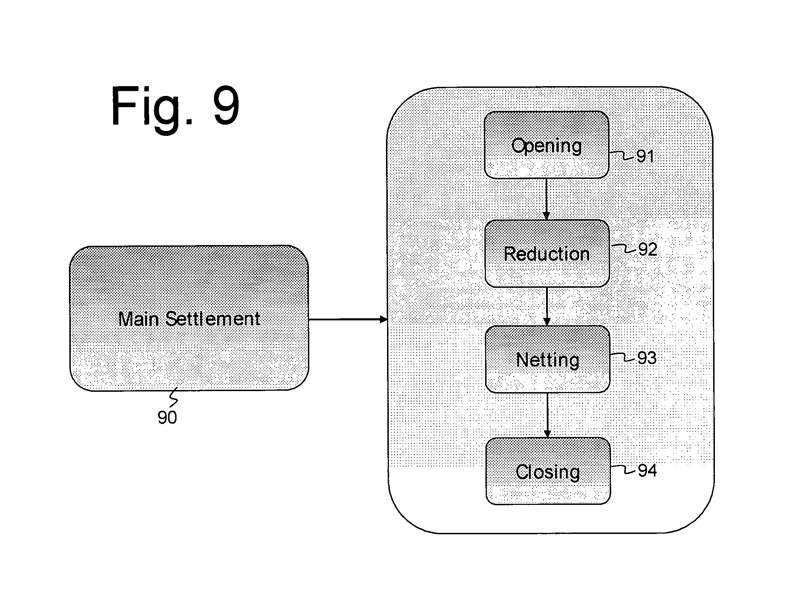

The total priority list of transaction data established during the opening is based on the following prioritisation rules:
That securities priority is always leading which results from a sorting of all transaction data within a type of securities (ISIN) according to:
   - priority (ascending), and
   - settlement day (ascending), and
   - nominal amount (descending), and
   - cash counter value (descending).
Taking these securities priority into account, all transaction data are sorted according to the following criteria in order to establish a total priority list:
   - priority (ascending), and
   - settlement day (ascending), and
   - cash counter value (descending).
The settlement procedure of the present invention comprises the steps of transferring the securities and cash balances, opening, reduction, netting, closing and outputting the settlement results for the securities and cash balances - as illustrated in Fig. 9.
The resulting list of sorted transaction data from the opening stage ensures that the number of iterations and re-priorisations during the netting procedure is minimised, i.e. a de-activation and re-activation of transaction data (in case of a shortage of securities or cash). In particular, the netting procedure can be executed with a minimum computation time.
During the opening processing, first the securities and cash balances from IMS databases 22 and 28 as shown in Fig. 8 are transferred to respective storage areas 72,73 of the settlement engine's working memory. The data records are addressed dynamically pointered in the 64-bit range of the main memory.
The opening procedure of the settlement process starts with the transfer of all transaction data from IMS database 51 to the respective storage area 52 in Fig. 7 in the settlement engine's working storage. The transaction data are sorted according to the securities priority, i.e. according to:
   - ISIN (ascending),
   - Priority (ascending),
   - Settlement data (ascending),
   - Nominal amount (descending), and
   - Cash counter value (descending).
The transferred data are successively written into Table 1 (reference number 52). During the transfer of the data of Table 1 (52), for each type of securities (ISIN) the data fields "priority", "settlement day", "cash counter value" and "instruction number" (only the last digit) of the first, i.e. highest prioritised transaction, and the position thereof in Table 1 together with the position of the last, i.e. lowest prioritised transaction are written into a second Table 2 (53) sorted by means of a binary search algorithm according to the total priority. This is achieved by an addressing with 64-bit and pointering on Table 1. Accordingly, the multi-dimensional input Table 1 and the multi-dimensional intermediate Table 2 are held dynamically by the operating system in the working memory until all transaction data are included within both tables and can be read out for processing the result.
Transaction data without cash counter value are prioritised higher than transaction data with cash counter value (as long as ISIN, priority, settlement day and nominal amount are identical) such that the transaction data without cash counter value are not penalised during the establishment of the total priority list (here, the securities side is leading).
The randomisation of transaction data is implemented as follows. In case all criteria employed for the comparison, namely priority, settlement day, and cash counter value, are identical, the sum of the instruction numbers is calculated and if the resulting sum is even, the second transaction is prioritised higher (in case of an odd sum, the second transaction is prioritised lower).
Although only a single implementation of a randomisation during the prioritisation process is described, a skilled person is aware that any other algorithm may be used for this purpose with the same effect.
Structure of Table 2:
   - priority,
   - settlement day,
   - cash counter value (high value for transaction data without cash counter value),
   - instruction number(only the last digit),
   - Pos (position in Table 1 of the transaction data having the highest priority within the ISIN),
   - PosLetzt (position in Table 1 of the transaction data of the lowest priority within the ISIN).
Sorting of the transaction data within Table 2:
   - priority (descending),
   - settlement day (descending),
   - cash counter value (ascending),
i.e. the transaction data having the highest total priority is positioned at the end of Table 2. A skilled person is aware, that the transaction data having the highest total priority can also be positioned at the top of the entries in the Table 2 with the same effect.

After all transaction data having entered into Table 1 and the data of the highest prioritised transaction data for each ISIN have been entered into Table 2, the following processing for the transfer of transactions can be started.

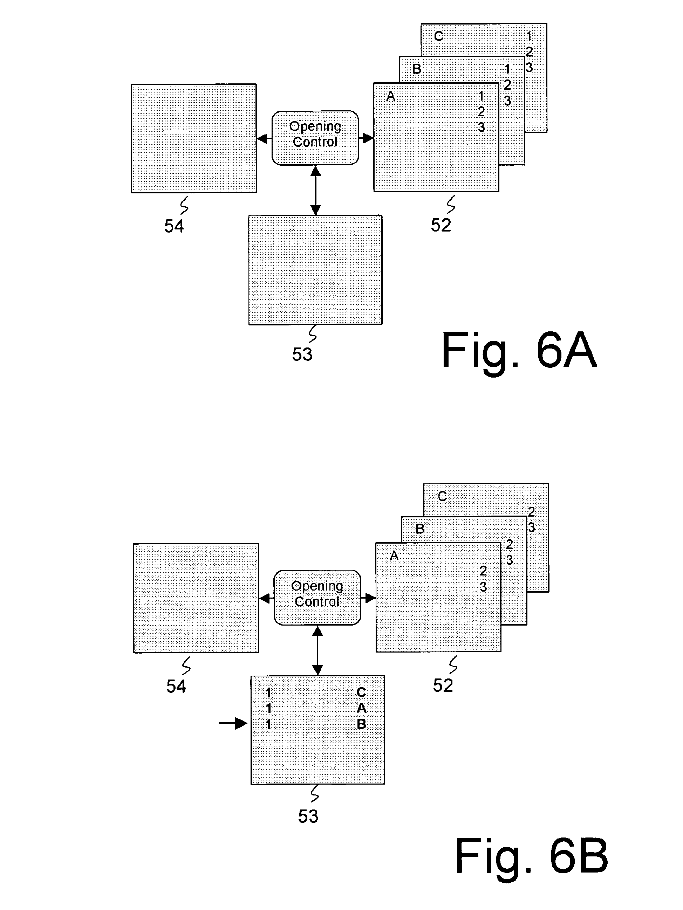

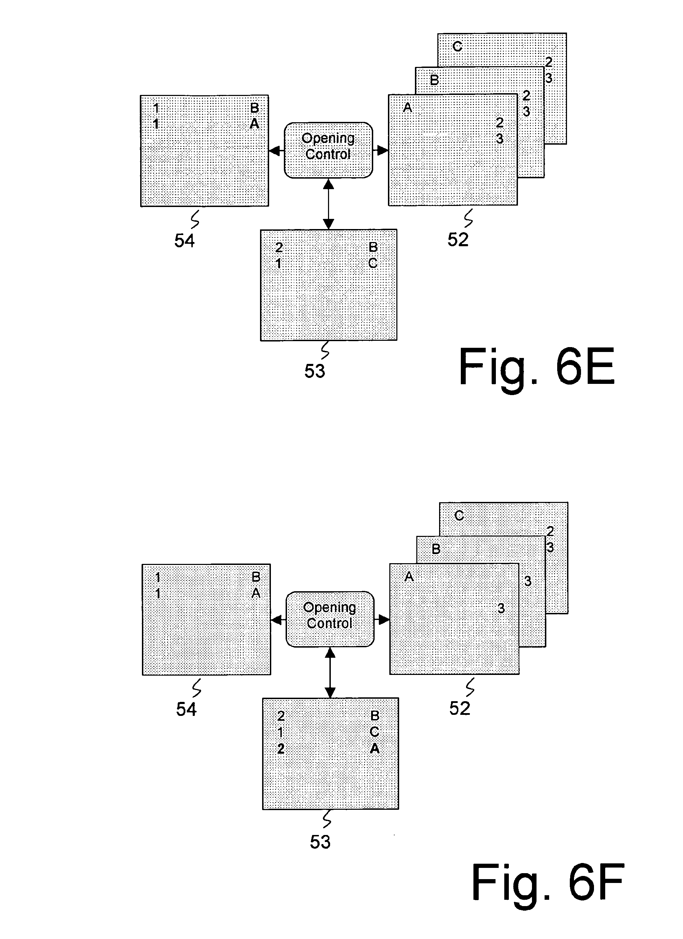

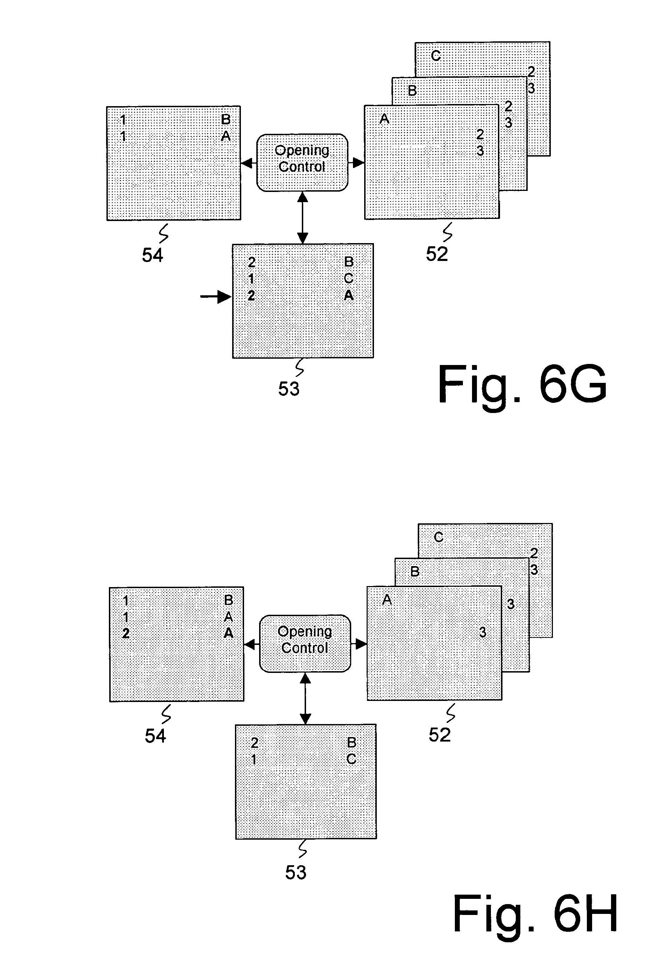

The details of this part of the opening processing will now be described with reference to Figs. 6A to 6H.

Table 1 (52) includes the transaction data to be settled. The transaction data are sorted in accordance with the different types of securities (cf. example security types A, B, C in Fig. 6A). The transaction data for each type of securities may be provided in the form of individual sub-tables as illustrated in Fig. 6A or in form of a single table sorted in accordance with the type of securities.

As illustrated in Fig. 6B, that transaction data from Table 1 (52) is transferred to the intermediate storage Table 2 (53) that have the highest priority within each type of securities A, B, C. The transaction data stored in Table 2 are sorted in accordance with a priority such that the transaction data having the highest priority are at the first or, alternatively, at the last position of the entries in Table 2.

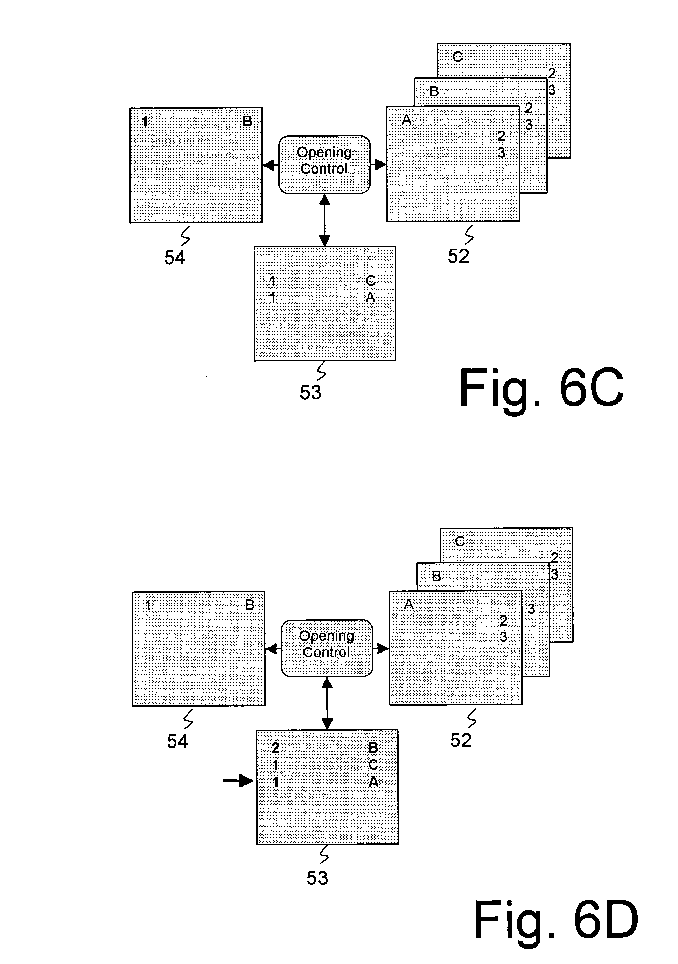

The transaction data of Table 2 having the highest priority is transferred to the total priority list storage area (54) (cf. Fig. 6B and Fig. 6C).

The transaction data removed from Table 2 to the total priority list 54 is replaced by another transaction data from Table 1 belonging to the same type of securities which has been transferred to total priority list storage area 54.

Again, the transaction data having the highest priority is transferred to the total priority list storage area 54 and replaced by a respective new transaction data from Table 1 (cf. Figs. 6D to 6H). In this manner, a total priority list of all transaction data to be settled can be established in an efficient manner.

The individual processing stages of a main settlement processing are illustrated in Fig. 9. Accordingly, the particular opening processing 91 of the main settlement processing 90 enables to considerably accelerate the computation of the subsequent processing stages 92, 93 and 94, in particular the netting processing 93. Based on the opening processing of the present invention, a repetitive netting processing can be avoided and an iterative approaching of the netting result and re-prioritisation is prevented.

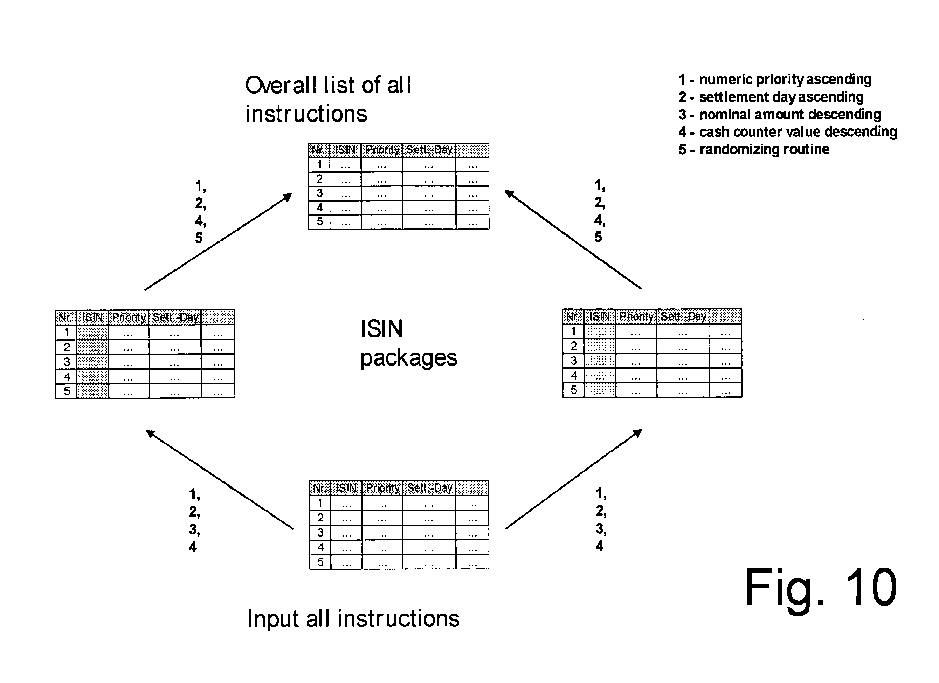

Fig. 10 generally illustrates the particular processing approach of the present invention. The transaction data to be settled are split up into individual sub-tables for each of the security types / ISIN values. Based on the individual security type tables (which correspond to the above mentioned Table 1), a total priority list is established.

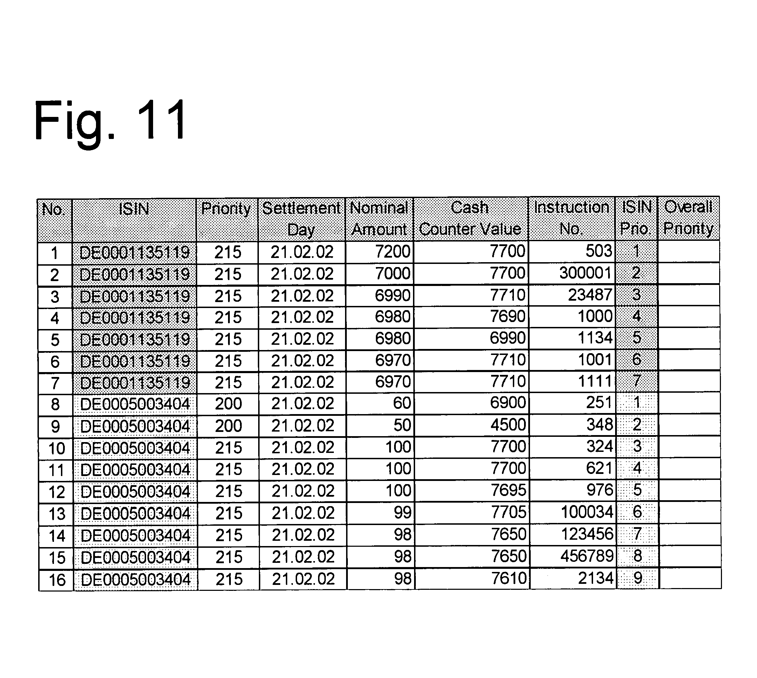

An alternative sorting of the transaction data to be settled is illustrated in Fig. 11, namely in form of a single list instead of a plurality of sub-tables. The transaction data are sorted according to their ISIN value, their priority, their settlement day, their nominal amount and their cash counter value. If transaction data have identical criteria in this respect, the original sequence is maintained. This can be seen, for example, at the ascending instruction numbers (cf. Nos. 6, 7; 10, 11; and 14,15).

Based on the transaction data of Table 1, as shown in Fig. 11, those transaction data having the highest priority, namely transaction Nos. 1 and 8, are transferred to Table 2.

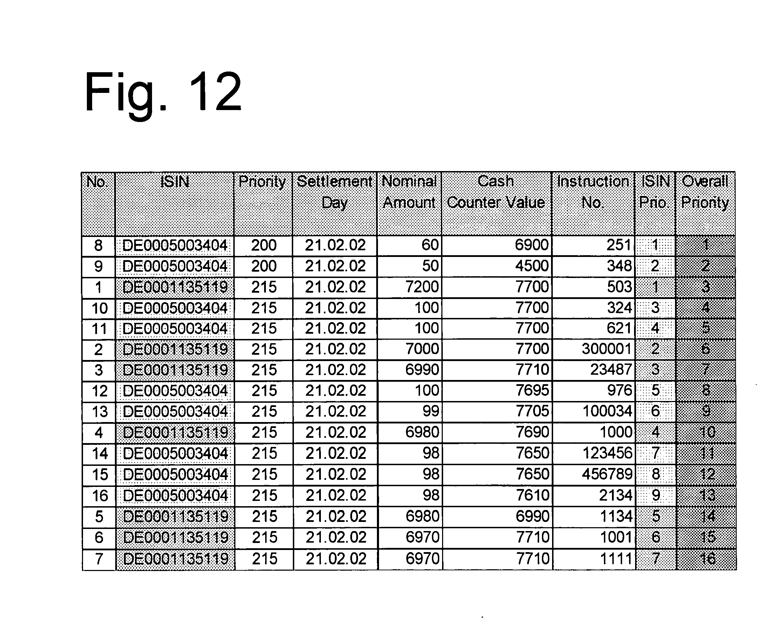

The priority of the transaction data of No. 8 (having a priority value "200") is higher than that of the transaction data of No. 1 (having a priority value of "215"). Accordingly, the transaction data of No. 8 receives the highest priority assigned and is transferred to the total priority list at position number one, as illustrated in Fig. 12.

After the transfer of the transaction data of No. 8, the subsequent transaction data (No. 9) of the same security type is transferred to Table 2. Its priority ("200") is higher than the priority of the other transaction data (No. 1) in Table 2, namely higher than the priority of the transaction data No.1, this new transaction data is higher prioritised and assigned the second position in the total priority list (cf. Fig. 12).

The next transaction data to be inserted into Table 2 is transaction data No. 10 of Fig. 11. This transaction data belongs to the same type of security (having the same ISIN number). The two transaction data (No. 1 and No. 10) present in Table 2 have identical values in the data fields used for establishing the total priority list. Thus, the prioritisation is performed based on a randomisation rule. As described above, every type of appropriate randomisation algorithm can be employed for this purpose.

To illustrate a randomised prioritisation approach, the prioritisation is described by way of example based on whether or not the sum of the last digit of the instruction numbers of the involved transactions is an even or an odd number. In the present example the last digits of the instruction numbers are 3 and 4. 3 + 4 = 7 is an odd number. In accordance with the above random prioritisation rule, transaction data No. 10 are lower prioritised than the transaction data of No. 1. Accordingly, the transaction data No. 1 is assigned to the total priority 3.

The subsequent transaction data of the same security type of transaction No. 1 is now transferred to Table 2. Again, all comparison criteria employed for the prioritisation are identical. The addition of the last digits of instruction Nos. 4 and 1 results in an odd number (5). Accordingly, the transaction data of No. 2 is prioritised lower than the transaction data of No. 10. The transaction data of No. 10 is assigned the total priority 4.

The transaction data No. 11 are inserted into Table 2. Again all criteria are identical and the addition of the last digits of the instruction numbers (1 + 1) result in an even number. Accordingly, the transaction data No. 11 are prioritised higher than the transaction data of No. 2. The transaction data of No. 11 is assigned the total priority 5.

Next, the transaction data of No. 12 is inserted into Table 2. The cash counter value (7695) is lower than the cash counter value of transaction data No. 2 (7700). Accordingly, the transaction data of No. 12 is prioritised lower and the total priority 6 is assigned to the transaction data of No. 2.

Next, the transaction data of No. 3 is inserted into Table 2. This transaction data has a higher cash counter value than the transaction data of No. 12. Accordingly, the total priority 7 is assigned to transaction data No. 3.

The transaction data of No. 4 is inserted next into Table 2. The transaction data of No. 4 has a lower cash counter value than the transaction data of No. 12. Accordingly, the total priority 8 is assigned to the transaction data of No. 12.

Now, the transaction data of No. 13 is inserted into Table 2. This transaction data has a higher cash counter value than the transaction data of No. 4 already present in Table 2. Thus, total priority 9 is assigned to the transaction to data No. 13.

The transaction data of No. 14 is inserted next into Table 2. This transaction data has a lower cash counter value than transaction data No. 4 which is assigned the total priority 10.

The transaction data of No. 5 is inserted next. This transaction data has a lower cash counter value than the transaction data of No. 14. The total priority 11 is assigned to the transaction data of No. 14.

The transaction data of No. 15 is inserted next. This transaction data has a cash counter value higher than that of transaction data No. 5. The total priority 12 is accordingly assigned to the transaction data of No. 15.

Next, the transaction data of No. 16 is inserted, which has a higher cash counter value than that of No. 5. Accordingly, a total priority 13 is assigned to the transaction data of No. 16.

As this type of security does not include any further transaction data, the total priority 14 is assigned to the remaining transaction data No. 5.

After inserting the transaction data No. 6 into Table 2, the total priority 15 is assigned to this transaction data as no other transaction data is remaining in Table 2.

In the same manner, the transaction data of No. 7 is inserted into Table 2 and, as no other transaction data are remaining in Table 2, a total priority of 16 is assigned to this transaction data.

After all transaction data have been transferred through Table 2 into the total priority list in memory section 54, the total priority list of all transaction data to be settled is established and transferred to the next processing stage, namely the reduction stage, as illustrated in Figs. 8 and 9. The final total priority list of the above-described example is shown in Fig. 12. It has to be noted that the sequence of individual transaction data within a particular security type is maintained.

After the first processing stage of the settlement processing is completed and the total priority list of the opening stage accomplished, the settlement processing steps forward to the reduction stage 92. In the reduction processing 92, the data made available in the 64-bit address range is transferred to a 24-bit address range for normalisation and subsequent use in the netting stage 93.

The reduced total priority list of transaction data is input to the netting stage 93.

The netting processing is the core-processing step to the settlement process 90. The individual transaction data is processed in accordance with the established total priority list.

During the netting processing, balances are built from the available resources and transactions. However, it may happen that individual balances turn out to be in a debit position. These debit positions can be made balanced through an alternating and iterative coverage check process for securities and cash by excluding particular transactions. In order to achieve an optimum result, excluded transactions can be re-activated again. The exclusion and re-activation of transaction data takes place under consideration of the total priority, i.e. from the related transactions only those having the lowest priority are excluded and those having the highest priority from the excluded transactions are re-activated.

In the coverage check for securities, only securities are checked, while in the coverage examination cash, only the cash holdings are checked. The respective coverage check is completed once all appropriate positions are balanced and no further transaction data can be re-activated.

The netting procedure 93 is completed when all securities and cash positions are permissible.

The netting procedure receives the transaction data of all open transactions from the reduction stage 92 and the balance tables of the available securities and cash (cf. 72,73 in Fig. 8).

First, the index table on the securities is processed. If all balances of the securities are permissible, the next table cash is processed until all cash balances are permissible. However, inadmissible balances can arise again on the security side. Thus, the index tables of securities and cash are processed in an alternate manner as long as all securities and cash balances are permissible.

After the settlement process is completed, all results are processed in a closing process 94 for output to the IMS databases 76,77.

Summarising, the present invention aims to provide a more efficient settlement engine requiring less computation effort and processing time. This is accomplished by establishing a total priority list of all transactions. The received transaction data to be settled are step-wisely transferred to an intermediate table storing the transaction data of highest priority for each security type, and transferring the transaction data of highest priority from the intermediate storage to the final total priority list.

## Claims

1. A settlement engine for settling transactions which define obligations for transferring securities versus cash between market participants, comprising:
a first memory (51) for storing transaction data,
a second memory (54) for storing the transaction data in form of a total priority list,
a third memory (72) and a fourth memory (73) for storing the available securities and cash of the involved market participants,
a fifth memory (74) for storing net obligations resulting from a netting process, and
a processor for establishing said total priority list of the transaction data to be stored in said second memory (54), and for netting the obligations stemming from the transactions with respect to the individual market participants in accordance with said total priority list of transaction data in said second memory (54), wherein a transaction data from said total priority list of said second memory (54) is skipped from the netting process in case of a shortage of cash or securities of the respective transaction based on the data stored in said third and fourth memories (72, 73).

2. A settlement engine according to claim 1, wherein the transaction data including a priority data field indicating the priority of the security underlying the transaction.

3. A settlement engine according to claim 2, wherein the transaction data further including a settlement day data field and/or a cash count value data field.

4. A settlement engine according to any of claims 1 to 3, wherein said processor comparing corresponding data fields of said transaction data for establishing said total priority list of transaction data.

5. A settlement engine according to claim 4, wherein said processor comparing the transaction data based on the priority data field.

6. A settlement engine according to claim 5, wherein said processor further comparing the transaction data of identical priority data based on at least one of the further data fields of said transaction data.

7. A settlement engine according to claim 5 or 6, wherein said processor randomly prioritizing transaction data having identical data fields employed for said comparison.

8. A settlement engine according to any of claims 1 to 7, wherein said first memory (51) storing said transaction data with a data length of 64 bits.

9. A settlement engine according to any of claims 1 to 8, wherein said second memory (54) storing said transaction data with a data length of 64 bits.

10. A settlement engine according to any of claims 1 to 9, wherein said processor carrying out a coverage evaluation based on the data stored in said third and said fourth memories (72, 73) for determining whether or not to skip a transaction data.

11. A settlement engine according to claim 10, wherein said processor carrying out a coverage evaluation for said available securities based on the data of said third memory (72) before carrying out a coverage evaluation of said available cash based on the data of said fourth memory (73).

12. A settlement engine according to claim 10 or 11, wherein said processor skipping that transaction data from said total priority list having the lowest priority.

13. A settlement engine according to claim 12, wherein said processor reactivating that transaction data into said total priority list of transaction data having the highest priority.

14. A method for settling transactions which define obligations for transferring securities versus cash between market participants, comprising the steps of:
storing transaction data in a first memory (51),
establishing a total priority list of the transaction data,
storing the transaction data in form of said established total priority list in a second memory (54),
storing the available securities and cash of the involved market participants in a third memory (72) and a fourth memory (73),
netting the obligations stemming from the transactions with respect to the individual market participants in accordance with the total priority list of transaction data in said second memory (54), wherein a transaction data from the total priority list of said second memory (54) is skipped from the netting process in case of a shortage of cash or securities of the respective transaction based on the data stored in said third and fourth memories (72, 73), and
storing net obligations resulting from the netting process in a fifth memory (74).

15. A method according to claim 14, wherein the transaction data including a priority data field indicating the priority of the security underlying the transaction.

16. A method according to claim 15, wherein the transaction data further including a settlement day data field and/or a cash count value data field.

17. A method according to any of claims 14 to 16, wherein said step of establishing said total priority list of transaction data comparing corresponding data fields of said transaction data.

18. A method according to claim 17, wherein said comparing step comparing the transaction data based on the priority data field.

19. A method according to claim 18, wherein said comparing step further comparing the transaction data of identical priority data based on at least one of the further data fields of said transaction data.

20. A method according to claim 18 or 19, wherein said step of establishing said total priority list of transaction data randomly prioritizes transaction data having identical data fields employed for said comparison.

21. A method according to any of claims 14 to 20, wherein said transaction data stored in said first memory (51) have a data length of 64 bits.

22. A method according to any of claims 14 to 21, wherein said transaction data stored in said second memory (54) have a data length of 64 bits.

23. A method according to any of claims 14 to 22, wherein said netting step carrying out a coverage evaluation based on the data stored in said third and said fourth memories (72, 73) for determining whether or not to skip a transaction data.

24. A method according to claim 23, wherein said netting step carrying out a coverage evaluation for said available securities based on the data of said third memory (72) before carrying out a coverage evaluation of said available cash based on the data of said fourth memory (73).

25. A method according to claim 14 or 24, wherein said netting step skipping that transaction data from said total priority list having the lowest priority.

26. A method according to claim 25, wherein said netting step reactivating that transaction data into the total priority list of transaction data having the highest priority.
